# EUROPEAN PATENT APPLICATION

(11) **EP 4 664 608 A1**
(43) Date of publication of application: **17.12.2025**
(21) Application number: 24909216.4
(22) Date of filing: 13.11.2024
(51) Int. Cl.: H01M 10/615, H01M 10/6568, H01M 10/635

(54) **CONTROL METHOD FOR REFRIGERATION SYSTEM, RELATED APPARATUS AND STORAGE MEDIUM**

(30) Priority: 29.04.2024 CN 202410525864
(71) Applicant: Huzhou Sany Loader Co., Ltd., Huzhou, Zhejiang 313000 (CN)
(72) Inventor: YIN, Yuxian, Huzhou, Zhejiang 313000 (CN); WANG, Shuoqi, Huzhou, Zhejiang 313000 (CN); LIU, Qinglong, Huzhou, Zhejiang 313000 (CN)
(74) Representative: Elzaburu S.L.P.
(86) International application number: PCT/CN2024/131873
(87) International publication number: WO 2025/227651

(57) **Abstract**

Embodiments of the present application provide a control method for a refrigeration system, related devices, and a storage medium, involving battery cooling technology. The method includes: in a case that a current ambient temperature being within a first preset temperature range is determined, a water pump of the refrigeration system and a compressor of the refrigeration system are activated; in a case that a first pressure corresponding to the refrigeration system reaching a preset pressure value is determined, a fan of the refrigeration system is activated, so as to maintain a pressure of the refrigeration system within a preset pressure range for cooling a battery management system; in a case that the current ambient temperature being within a second preset temperature range is determined, the water pump of the refrigeration system is activated, and activation of the compressor and the fan is prohibited.

## Description

This application claims priority to Chinese patent application No. 202410525864.9, filed with the China National Intellectual Property Administration on April 29, 2024 and entitled "CONTROL METHOD FOR REFRIGERATION SYSTEM, RELATED DEVICES, AND STORAGE MEDIUM", which is hereby incorporated by reference in its entirety.

### TECHNICAL FIELD

The present application relates to the field of battery cooling technology, and in particular, to a control method for a refrigeration system, related devices, and a storage medium.

### BACKGROUND

A Battery Thermal Management System (Battery Thermal Management System, abbreviated as BTMS) has become standard configuration for electric-powered working machinery. The Electric-powered working machinery operates under diverse working conditions, including many extreme working conditions, such as working environments with very low temperatures, e.g., as low as -30 °C or even lower. Although the working environment temperature of the working machinery is very low, there is still a refrigeration demand when the battery of the working machinery generates heat during charging.

When the refrigeration demand is executed for the battery in the low-temperature environment, due to the influence of the ambient temperature, the low-pressure side of the refrigeration system of the working machinery is prone to the phenomenon of excessively low low-pressure pressure of refrigerant, thus causing the problem that a low-pressure pressure switch disconnects, which results in the BTMS system being unable to perform protection work and the refrigeration demand for the battery not being implemented.

### SUMMARY

Embodiments of the present application provide a control method for a refrigeration system, related devices, and a storage medium, aiming to solve the problem of ineffective battery cooling in the low-temperature environment in the prior art and achieve the purpose of effective battery cooling in the low-temperature environment.

An embodiment of the present application provides a control method for a refrigeration system, including:
in a case that a current ambient temperature being within a first preset temperature range is determined, activating a water pump of the refrigeration system and a compressor of the refrigeration system, and in a case that a first pressure corresponding to the refrigeration system being less than a preset pressure value is determined, maintaining the water pump and the compressor in operation;
in a case that the first pressure corresponding to the refrigeration system reaching the preset pressure value is determined, activating a fan of the refrigeration system, so as to maintain a pressure of the refrigeration system within a preset pressure range for cooling a battery management system;
in a case that the current ambient temperature being within a second preset temperature range is determined, activating the water pump of the refrigeration system, and prohibiting activation of the compressor and the fan, where a highest temperature of the second preset temperature range is less than or equal to a lowest temperature of the first preset temperature range.

In the control method for the refrigeration system according to the embodiment of the present application, in the case that the current ambient temperature being within the first preset temperature range is determined, the activating the water pump of the refrigeration system and the compressor of the refrigeration system includes:
in the case that the current ambient temperature being within the first preset temperature range is determined, activating the water pump of the refrigeration system, and in a case that a running duration of the water pump reaches a preset duration, activating the compressor of the refrigeration system.

In the control method for the refrigeration system according to the embodiment of the present application, in the case that the current ambient temperature being within the first preset temperature range is determined, before activating the water pump of the refrigeration system and the compressor of the refrigeration system, the method further includes:
receiving a refrigeration demand sent by the battery management system;
based on the refrigeration demand, detecting the current ambient temperature;
in a case that the current ambient temperature being less than a preset temperature is determined, determining whether the current ambient temperature is within the first preset temperature range or within the second preset temperature range.

In the control method for the refrigeration system according to the embodiment of the present application, after activating the fan of the refrigeration system, the method further includes:
obtaining a second pressure corresponding to the refrigeration system;
adjusting at least one of system operating parameters of the refrigeration system based on the second pressure, so as to maintain the pressure of the refrigeration system within the preset pressure range for cooling the battery management system, where the system operating parameters include: a wind speed of the fan, activation of the fan, deactivation of the fan, a rotation speed of the compressor, and a rotation speed of the water pump.

In the control method for the refrigeration system according to the embodiment of the present application, the battery management system corresponds to a target temperature range;
the adjusting the at least one of the system operating parameters of the refrigeration system based on the second pressure includes:
detecting a current water temperature corresponding to the battery management system;
based on the current water temperature, the target temperature range, and the second pressure, adjusting the at least one of the system operating parameters of the refrigeration system.

An embodiment of the present application provides a control apparatus for a refrigeration system, including:
a first control module, configured to: in a case that a current ambient temperature being within a first preset temperature range is determined, activate a water pump of the refrigeration system and a compressor of the refrigeration system, and in a case that a first pressure corresponding to the refrigeration system being less than a preset pressure value is determined, maintain the water pump and the compressor in operation;
a second control module, configured to: in a case that the first pressure corresponding to the refrigeration system reaching the preset pressure value is determined, activate a fan of the refrigeration system, so as to maintain a pressure of the refrigeration system within a preset pressure range for cooling a battery management system;
a third control module, configured to: in a case that the current ambient temperature being within a second preset temperature range is determined, activate the water pump of the refrigeration system, and prohibit activation of the compressor and the fan, where a highest temperature of the second preset temperature range is less than or equal to a lowest temperature of the first preset temperature range.

An embodiment of the present application further provides an interactive system for refrigeration, including: a refrigeration system and a battery management system, where the refrigeration system and the battery management system are communicatively connected;
the battery management system is configured to: generate a refrigeration demand, and send the refrigeration demand to the refrigeration system;
the refrigeration system is configured to: based on the refrigeration demand, in a case that a current ambient temperature being within a first preset temperature range is determined, activate a water pump of the refrigeration system and a compressor of the refrigeration system, and in a case that a first pressure corresponding to the refrigeration system being less than a preset pressure value is determined, maintain the water pump and the compressor in operation; in a case that the first pressure corresponding to the refrigeration system reaching the preset pressure value is determined, activate a fan of the refrigeration system, so as to maintain a pressure of the refrigeration system within a preset pressure range for cooling the battery management system; in a case that the current ambient temperature being within a second preset temperature range is determined, activate the water pump of the refrigeration system, and prohibit activation of the compressor and the fan, where a highest temperature of the second preset temperature range is less than or equal to a lowest temperature of the first preset temperature range.

An embodiment of the present application further provides a working machinery, configured to implement steps of the control method for the refrigeration system.

An embodiment of the present application further provides an electronic device, including a memory, a processor, and a computer program stored on the memory and runnable on the processor, where when the processor executes the program, steps of the control method for the refrigeration system are implemented

An embodiment of the present application further provides a non-transitory computer-readable storage medium, where a computer program is stored thereon, when the computer program is executed by a processor, steps of the control method for the refrigeration system are implemented.

In the control method for the refrigeration system, the related devices, and the storage medium provided in the embodiments of the present application, in the case that the current ambient temperature being within the first preset temperature range is determined, by activating the water pump of the refrigeration system and the compressor of the refrigeration system, and in the case that the first pressure corresponding to the refrigeration system being less than the preset pressure value is determined, by maintaining the water pump and the compressor in operation, a preliminary cooling for the battery is achieved using a water-circuit circulation manner. Further, in the case that the first pressure (a refrigerant pressure) corresponding to the refrigeration system reaching the preset pressure value is determined, the fan of the refrigeration system is activated, so as to maintain the pressure of the refrigeration system within the preset pressure range for cooling the battery management system. It can be seen that in the present application, the fan is activated based on the pressure of the refrigeration system, which can effectively avoid the occurrence of the phenomenon of too low hydraulic pressure on a low-pressure side of the refrigeration system, thus avoiding the problem that the low-pressure pressure switch disconnects and the BTMS is unable to perform the protection work, which ensures a normal and effective implementation of the refrigeration demand for the battery, and achieves the purpose of effective battery cooling in the low-temperature environment. In the case that the current ambient temperature being within the second preset temperature range is determined, by activating the water pump of the refrigeration system, and by prohibiting the activation of the compressor and the fan, energy saving is achieved along with the effective battery cooling in the low-temperature environment.

### BRIEF DESCRIPTION OF DRAWINGS

FIG. 1 is schematic flowchart I of a control method for a refrigeration system provided in an embodiment of the present application.
FIG. 2 is schematic flowchart II of a control method for a refrigeration system provided in an embodiment of the present application.
FIG. 3 is schematic flowchart III of a control method for a refrigeration system provided in an embodiment of the present application.
FIG. 4 is a schematic structural diagram of a control apparatus for a refrigeration system provided in an embodiment of the present application.
FIG. 5 is a schematic structural diagram of an interactive system for refrigeration provided in an embodiment of the present application.
FIG. 6 is a schematic structural diagram of an electronic device provided in an embodiment of the present application.

### DESCRIPTION OF EMBODIMENTS

To make the objectives, technical solutions, and advantages of the embodiments of the present application clearer, the following combines the drawings in the embodiments of the present application to provide a clear and complete description of the technical solutions in the embodiments of the present application. It is clear that the described embodiments are part of the embodiments of the present application, not all of them. Based on the embodiments of the present application, all other embodiments obtained by those of ordinary skill in the art without creative effort shall fall within the protection scope of the present application.

An embodiment of the present application provides a control method for a refrigeration system. This method may be applied to working machinery, such as cranes, excavators, loaders, road rollers, etc., may also be applied to servers, and may further be applied to smart terminals. Below, this method applied to working machinery is taken as an example for description. However, it should be noted that this is only for illustrative purposes and is not used to limit the protection scope of the present application. Some other descriptions in the embodiments of the present application are also for illustrative purposes and are not used to limit the protection scope of the present application. No further elaboration will be made hereinafter.

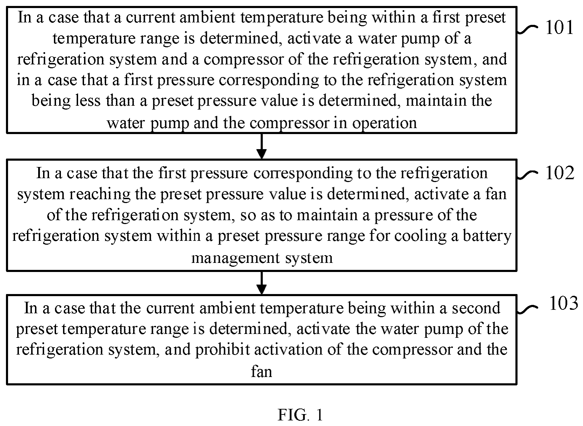

A specific implementation of the method is shown in FIG. 1.

Step 101, in a case that a current ambient temperature being within a first preset temperature range is determined, activate a water pump of a refrigeration system and a compressor of the refrigeration system, and in a case that a first pressure corresponding to the refrigeration system being less than a preset pressure value is determined, maintain the water pump and the compressor in operation.

Here, the ambient temperature refers to the temperature of the environment where the working machinery operates. The first preset temperature range is, for example, [-10 °C, 5 °C], and may be set by a user based on actual needs, with no limitation imposed by the present application.

For example, when the current ambient temperature is within [-10 °C, 5 °C], the water pump of the refrigeration system and the compressor of the refrigeration system are activated.

Step 102, in a case that the first pressure corresponding to the refrigeration system reaching the preset pressure value is determined, activate a fan of the refrigeration system, so as to maintain a pressure of the refrigeration system within a preset pressure range for cooling a battery management system.

Here, the pressure corresponding to the refrigeration system refers to a refrigerant pressure of the refrigeration system. For example, the preset pressure is 1.4 MPa, and the preset pressure range is 0.8 MPa - 2.2 MPa, which may be set by the user based on actual needs, with no limitation imposed by the present application.

Specifically, when the first pressure is less than the preset pressure, only the water pump and the compressor operate, while the fan (corresponding to a condenser fan) does not work. As the water pump and the compressor operate, the temperature of the refrigerant rises after heat exchange with the battery, and the pressure of the refrigeration system increases. If the fan is activated when the first pressure is less than the preset pressure, the pressure may drop to an abnormal value due to the fan cooling a cooling pipeline (or over-cooling the refrigerant), thus causing the problem that a low-pressure pressure switch disconnects, which results in the BTMS system being unable to perform protection work and the refrigeration demand for the battery not being implemented. However, when the first pressure is greater than or equal to the preset pressure, if the fan is activated, and the compressor and the fan operate simultaneously, the above-mentioned problem will not occur. Therefore, in the present application, the fan of the refrigeration system is activated only when the first pressure corresponding to the refrigeration system reaching the preset pressure value is determined, ensuring normal implementation of the refrigeration demand for the battery.

Step 103, in a case that the current ambient temperature being within a second preset temperature range is determined, activate the water pump of the refrigeration system, and prohibit activation of the compressor and the fan.

Here, the highest temperature of the second preset temperature range is less than or equal to the lowest temperature of the first preset temperature range.

In the control method for the refrigeration system provided in the embodiment of the present application, in the case that the current ambient temperature being within the first preset temperature range is determined, by activating the water pump of the refrigeration system and the compressor of the refrigeration system, a preliminary cooling for the battery is achieved using a water-circuit circulation manner. Further, in the case that the first pressure (a refrigerant pressure) corresponding to the refrigeration system reaching the preset pressure value is determined, the fan of the refrigeration system is activated, so as to maintain the pressure of the refrigeration system within the preset pressure range for cooling the battery management system. It can be seen that in the present application, the fan is activated based on the pressure of the refrigeration system, which can effectively avoid the occurrence of the phenomenon of too low hydraulic pressure on a low-pressure side of the refrigeration system, thus avoiding the problem that the low-pressure pressure switch disconnects and the BTMS is unable to perform the protection work, which ensures a normal and effective implementation of the refrigeration demand for the battery, and achieves the purpose of effective battery cooling in the low-temperature environment.

In a specific embodiment, in the case that the current ambient temperature being within the first preset temperature range is determined, before activating the water pump of the refrigeration system and the compressor of the refrigeration system, or in the case that the current ambient temperature being within the second preset temperature range is determined, before activating the water pump of the refrigeration system, and prohibiting the activation of the compressor and the fan, receive a refrigeration demand sent by the battery management system; based on the refrigeration demand, detect the current ambient temperature; in a case that the current ambient temperature being less than a preset temperature is determined, determine whether the current ambient temperature is within the first preset temperature range or within the second preset temperature range.

Here, the preset temperature is the lowest temperature of the first preset temperature range, e.g., -10 °C.

Here, the second preset temperature range is, for example, the temperature range lower than -10 °C, which may be set by the user based on actual needs and the first preset temperature range, with no limitation imposed by the present application. The highest temperature of the second preset temperature range is less than or equal to the lowest temperature of the first preset temperature range.

Specifically, the battery management system monitors a battery temperature of the battery (or cell), generates the refrigeration demand when the battery temperature exceeds the preset temperature, and sends the refrigeration demand to a controller of the refrigeration system. The controller sends a temperature detection instruction to a detection component (e.g., temperature sensor), and after receiving the temperature detection instruction, the temperature sensor detects the current ambient temperature and returns the current ambient temperature to the controller. The controller compares the obtained current ambient temperature with the preset temperature, and in the case that the current ambient temperature being less than the preset temperature is determined, determines whether the current ambient temperature is within the first preset temperature range or within the second preset temperature range.

Specifically, refrigeration modes in the present application include: a normal refrigeration mode and a low-temperature refrigeration mode. In the case that the current ambient temperature being greater than or equal to the preset temperature is determined, enter the normal refrigeration mode; in the case that the current ambient temperature being lower than the preset temperature is determined, enter the low-temperature refrigeration mode, and determine whether the current ambient temperature is within the first preset temperature range or within the second preset temperature range.

Here, the refrigeration operation in the normal refrigeration mode corresponds to the refrigeration operation of the refrigeration system in the prior art, and the present application does not provide specific descriptions.

Specifically, in the case that the current ambient temperature being lower than the preset temperature is determined, when entering the low-temperature refrigeration mode, return information used to indicate that the current moment is in the low-temperature refrigeration mode to the battery management system.

In the present application, by comparing the current ambient temperature with the preset temperature, and entering different refrigeration modes (the different refrigeration modes correspond to different refrigeration strategies), a more suitable refrigeration strategy is provided for the cooling of the battery management system, which can effectively improve the refrigeration efficiency of the battery management system.

In a specific embodiment, in the case that the current ambient temperature being within the first preset temperature range is determined, the specific implementation of the activating the water pump of the refrigeration system and the compressor of the refrigeration system includes:
in the case that the current ambient temperature being within the first preset temperature range is determined, first activating the water pump of the refrigeration system, and in a case that a running duration of the water pump reaches a preset duration, then activating the compressor of the refrigeration system.

For example, when the current ambient temperature being within [-10 °C, 5 °C] is determined, first the water pump of the refrigeration system is activated to run, and the running duration of the water pump is recorded from the moment the water pump is activated. When the running duration of the water pump reaching the preset duration is determined, then the compressor is activated to run.

In a specific embodiment, in the case that the current ambient temperature being within the second preset temperature range is determined, the water pump of the refrigeration system is activated, and the activation of the compressor and the fan is prohibited.

For example, when the current ambient temperature being lower than -10 °C is determined, the water pump of the refrigeration system is activated, and the activation of the compressor and the fan is prohibited.

When the ambient temperature is relatively low, the temperature difference between the target temperature required for the battery (or cell) in the battery management system and a water temperature is relatively large, generally the temperature difference is greater than or equal to 36 °C. In this case, simply activating the water pump and using a water-circuit circulation system can achieve the rapid cooling of the battery management system.

Here, the target temperature falls within the target temperature range corresponding to the battery management system, that is, the target temperature of the battery pack in the battery management system. The user may determine one or more temperature values as the target temperature from the target temperature range according to his/her actual needs or battery properties.

Here, when the current ambient temperature is at the intersection point of the first preset temperature range and the second preset temperature range, the user may determine the refrigeration strategy according to his/her actual needs.

In an embodiment of the present application, for illustration, -10 °C is taken as an example of the intersection point of the first preset temperature range and the second preset temperature range, when the current ambient temperature is -10 °C, first the water pump of the refrigeration system is activated, and when the running duration of the water pump reaches the preset duration, then the refrigeration strategy of the compressor of the refrigeration system is activated.

In the present application, in the case of relatively low ambient temperature, simply activating the water pump and using the water-circuit circulation system can achieve the rapid cooling of the battery management system, which saves energy.

In a specific embodiment, after activating the fan of the refrigeration system, a second pressure corresponding to the refrigeration system is obtained; based on the second pressure, at least one of system operating parameters of the refrigeration system is adjusted, so as to maintain the pressure of the refrigeration system within the preset pressure range for cooling the battery management system.

Here, the system operating parameters include: a wind speed of the fan, activation of the fan, deactivation of the fan, a rotation speed of the compressor, and a rotation speed of the water pump.

Specifically, when the first pressure is greater than or equal to the preset pressure, after activating the fan, the pressure of the refrigeration system (the second pressure) needs to be further monitored in real time. To ensure that the pressure of the refrigeration system is maintained within the preset pressure range, at least one of the system operating parameters of the refrigeration system is adjusted at any time.

For example, when the second pressure is less than the minimum value of the preset pressure range, the fan is deactivated, and when the second pressure reaches the preset pressure, the fan is activated again. For another example, when the second pressure is greater than the maximum value of the preset pressure range, the rotation speed of the fan is increased and/or the rotation speed of the compressor is increased, etc.

Specifically, the rotation speed of the water pump can adjust the flow rate and velocity of the coolant or antifreeze in the battery cooling circuit. The larger the flow rate and/or velocity, the higher the temperature of the antifreeze per unit time (or the faster the temperature rises). Consequently, the temperature of the refrigerant after heat exchange per unit time is higher, and the refrigerant pressure is also higher. Therefore, by adjusting the rotation speed of the water pump, the change of the refrigerant after heat exchange can be influenced to adjust the cooling effect of the battery per unit time.

In the present application, after the refrigeration system operates normally, the second pressure of the refrigeration system continues to be detected, and the system operating parameters of the refrigeration system are adjusted at any time according to the second pressure to ensure the smooth operation of the refrigeration system and the cooling of the battery management system within the preset pressure range.

In a specific embodiment, the battery management system corresponds to a target temperature range. Therefore, it is necessary to adjust the water temperature within the target temperature range to reduce battery wear and extend the service life of the battery.

To achieve the above objective, in the present application, the current water temperature corresponding to the battery management system is detected; based on the current water temperature, the target temperature range, and the second pressure, the at least one of the system operating parameters of the refrigeration system is adjusted.

In the present application, on the basis of ensuring that the pressure of the refrigeration system is maintained within the preset pressure range by detecting the second pressure, the water temperature is maintained within an appropriate temperature range by adjusting the system operating parameters of the refrigeration system.

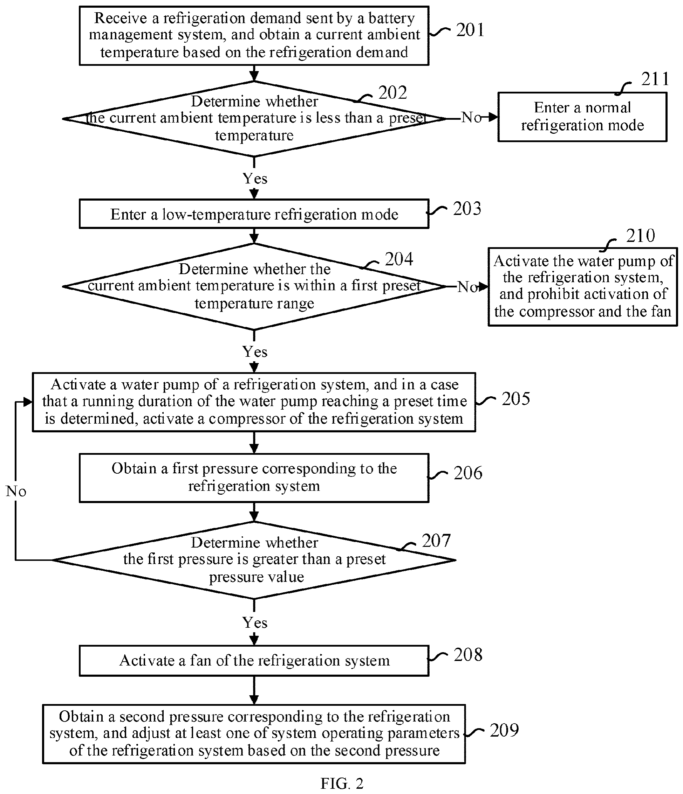

The following illustrates the present application in detail using FIG. 2.

Step 201, receive a refrigeration demand sent by a battery management system, and obtain a current ambient temperature based on the refrigeration demand.

Step 202, determine whether the current ambient temperature is less than a preset temperature. If yes, execute Step 203; otherwise, execute Step 211.

Step 203, enter a low-temperature refrigeration mode.

Step 204, determine whether the current ambient temperature is within a first preset temperature range. If yes, execute Step 205; otherwise, execute Step 210.

Step 205, activate a water pump of a refrigeration system, and in a case that a running duration of the water pump reaching a preset time is determined, activate a compressor of the refrigeration system.

Step 206, obtain a first pressure corresponding to the refrigeration system.

Step 207, determine whether the first pressure is greater than a preset pressure value. If yes, execute Step 208; otherwise, execute Step 205.

Step 208, activate a fan of the refrigeration system.

Step 209, obtain a second pressure corresponding to the refrigeration system, and adjust at least one of system operating parameters of the refrigeration system based on the second pressure.

Step 210, activate the water pump of the refrigeration system, and prohibit activation of the compressor and the fan.

Step 211, enter a normal refrigeration mode.

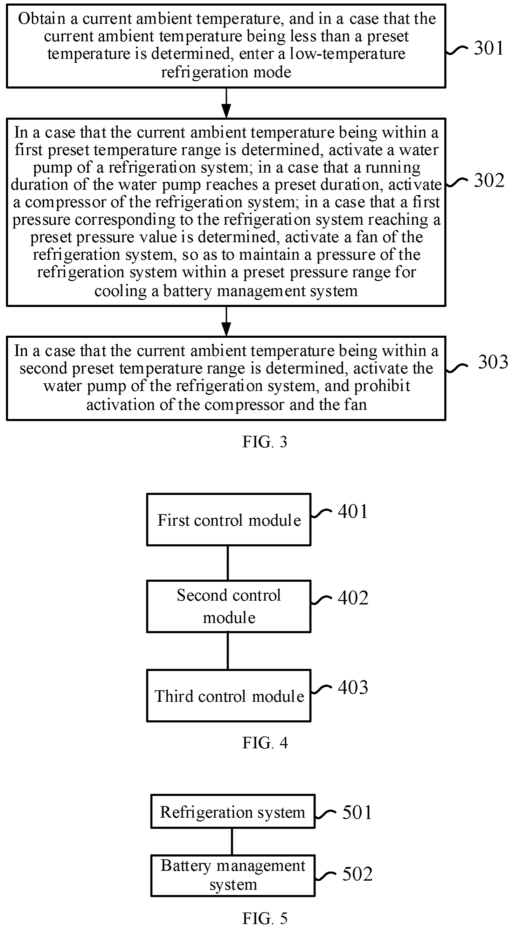

The following illustrates the present application in detail using FIG. 3.

Step 301, obtain a current ambient temperature, and in a case that the current ambient temperature being less than a preset temperature is determined, enter a low-temperature refrigeration mode.

Step 302, in a case that the current ambient temperature being within a first preset temperature range is determined, activate a water pump of a refrigeration system; in a case that a running duration of the water pump reaches a preset duration, activate a compressor of the refrigeration system; in a case that a first pressure corresponding to the refrigeration system reaching a preset pressure value is determined, activate a fan of the refrigeration system, so as to maintain a pressure of the refrigeration system within a preset pressure range for cooling a battery management system.

Step 303, in a case that the current ambient temperature being within a second preset temperature range is determined, activate the water pump of the refrigeration system, and prohibit activation of the compressor and the fan.

Here, Step 302 and Step 303 have no sequence of execution and are alternative to each other.

In the present application, in the case that the current ambient temperature being within the first preset temperature range is determined, by activating the water pump of the refrigeration system, preliminary cooling for the battery is achieved using a water-circuit circulation manner. Further, in the case that the running duration of the water pump reaching the preset duration is determined, the compressor of the refrigeration system is activated. In the case that the first pressure corresponding to the refrigeration system reaching the preset pressure value is determined, the fan of the refrigeration system is activated, so as to maintain the pressure of the refrigeration system within the preset pressure range for cooling the battery management system. It can be seen that in the present application, after the compressor is activated, the fan is activated based on pressure information, which can effectively avoid the occurrence of the phenomenon of too low pressure on a low-pressure side of the refrigeration system, thus avoiding the problem that the low-pressure pressure switch disconnects and the BTMS is unable to perform the protection work, which ensures a normal and effective implementation of the refrigeration demand for the battery, and achieves the purpose of effective battery cooling in the low-temperature environment. In the case that the current ambient temperature being within the second temperature range is determined, the water pump of the refrigeration system is activated, and the activation of the compressor and the fan is prohibited. Thus, the rapid cooling of the battery management system can be implemented by using the water-circuit circulation system.

The following describes a control apparatus for a refrigeration system provided in an embodiment of the present application. The control apparatus of the refrigeration system described below and the control method of the refrigeration system described above can be referred to each other. The repetitive parts will not be elaborated again. As shown in FIG. 4, the apparatus includes:
a first control module 401, configured to: in a case that a current ambient temperature being within a first preset temperature range is determined, activate a water pump of the refrigeration system and a compressor of the refrigeration system, and in a case that a first pressure corresponding to the refrigeration system being less than a preset pressure value is determined, maintain the water pump and the compressor in operation;
a second control module 402, configured to: in a case that the first pressure corresponding to the refrigeration system reaching the preset pressure value is determined, activate a fan of the refrigeration system, so as to maintain a pressure of the refrigeration system within a preset pressure range for cooling a battery management system;
a third control module 403, configured to: in a case that the current ambient temperature being within a second preset temperature range is determined, activate the water pump of the refrigeration system, and prohibit activation of the compressor and the fan, where a highest temperature of the second preset temperature range is less than or equal to a lowest temperature of the first preset temperature range.

In a specific embodiment, the second control module 402 is specifically configured to: in the case that the current ambient temperature being within the first preset temperature range is determined, activate the water pump of the refrigeration system, and in a case that a running duration of the water pump reaches a preset duration, activate the compressor of the refrigeration system.

In a specific embodiment, the apparatus further includes a determination module, configured to: receive a refrigeration demand sent by the battery management system; based on the refrigeration demand, detect the current ambient temperature; in a case that the current ambient temperature being less than a preset temperature is determined, determine whether the current ambient temperature is within the first preset temperature range or within the second preset temperature range.

In a specific embodiment, the apparatus further includes an adjustment module, configured to: obtain a second pressure corresponding to the refrigeration system; based on the second pressure, adjust at least one of system operating parameters of the refrigeration system, so as to maintain the pressure of the refrigeration system within the preset pressure range for cooling the battery management system, where the system operating parameters include: a wind speed of the fan, activation of the fan, deactivation of the fan, a rotation speed of the compressor, and a rotation speed of the water pump.

In a specific embodiment, the battery management system corresponds to a target temperature range; and the adjustment module is further configured to: detect a current water temperature corresponding to the battery management system; based on the current water temperature, the target temperature range, and the second pressure, adjust the at least one of the system operating parameters of the refrigeration system.

An embodiment of the present application further provides an interactive system for refrigeration, as shown in FIG. 5, including: a refrigeration system 501 and a battery management system 502, where the refrigeration system 501 and the battery management system 502 are communicatively connected.

The battery management system 502 is configured to: generate a refrigeration demand, and send the refrigeration demand to the refrigeration system 502.

The refrigeration system 501 is configured to: based on the refrigeration demand, in a case that a current ambient temperature being within a first preset temperature range is determined, activate a water pump of the refrigeration system 501 and a compressor of the refrigeration system 501, and in a case that a first pressure corresponding to the refrigeration system being less than a preset pressure value is determined, maintain the water pump and the compressor in operation; in a case that the first pressure corresponding to the refrigeration system 501 reaching the preset pressure value is determined, activate a fan of the refrigeration system 501, so as to maintain a pressure of the refrigeration system 501 within a preset pressure range for cooling the battery management system 502; in a case that the current ambient temperature being within a second preset temperature range is determined, activate the water pump of the refrigeration system, and prohibit activation of the compressor and the fan, where a highest temperature of the second preset temperature range is less than or equal to a lowest temperature of the first preset temperature range.

In a specific embodiment, the refrigeration system 501 is specifically configured to: in the case that the current ambient temperature being within the first preset temperature range is determined, activate the water pump of the refrigeration system, and in a case that a running duration of the water pump reaches a preset duration, activate the compressor of the refrigeration system.

In a specific embodiment, the refrigeration system 501 is specifically configured to: receive the refrigeration demand sent by the battery management system; based on the refrigeration demand, detect the current ambient temperature; in a case that the current ambient temperature being less than a preset temperature is determined, determine whether the current ambient temperature is within the first preset temperature range or within the second preset temperature range.

In a specific embodiment, the refrigeration system 501 is specifically configured to: obtain a second pressure corresponding to the refrigeration system; based on the second pressure, adjust at least one of system operating parameters of the refrigeration system, so as to maintain the pressure of the refrigeration system within the preset pressure range for cooling the battery management system, where the system operating parameters include: a wind speed of the fan, activation of the fan, deactivation of the fan, a rotation speed of the compressor, and a rotation speed of the water pump.

In a specific embodiment, the battery management system 502 corresponds to a target temperature range; and the refrigeration system 501 is specifically configured to: detect a current water temperature corresponding to the battery management system; based on the current water temperature, the target temperature range, and the second pressure, adjust the at least one of the system operating parameters of the refrigeration system.

An embodiment of the present application further provides a working machinery, including the control method for the refrigeration system provided in any of the above embodiments.

In a specific embodiment, the working machinery includes excavators, loaders, cranes, and road rollers, etc.

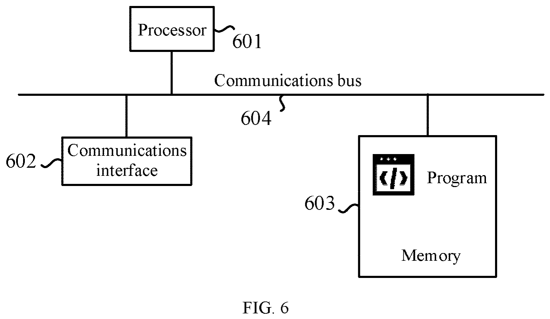

FIG. 6 illustrates a schematic diagram of a physical structure of an electronic device. As shown in FIG. 6, the electronic device may include: a processor (processor) 601, a communications interface (Communications Interface) 602, a memory (memory) 603, and a communications bus 604, where the processor 601, the communications interface 602, and the memory 603 communicate with each other through the communications bus 604. The processor 401 may invoke logical instructions in the memory 603 to execute a control method for a refrigeration system, where the method includes: in a case that a current ambient temperature being within a first preset temperature range is determined, activating a water pump of the refrigeration system and a compressor of the refrigeration system, and in a case that a first pressure corresponding to the refrigeration system being less than a preset pressure value is determined, maintaining the water pump and the compressor in operation; in a case that the first pressure corresponding to the refrigeration system reaching the preset pressure value is determined, activating a fan of the refrigeration system, so as to maintain a pressure of the refrigeration system within a preset pressure range for cooling a battery management system; in a case that the current ambient temperature being within a second preset temperature range is determined, activating the water pump of the refrigeration system, and prohibiting activation of the compressor and the fan, where a highest temperature of the second preset temperature range is less than or equal to a lowest temperature of the first preset temperature range.

In addition, when the logical instructions in the above-mentioned memory 603 are implemented in the form of software functional units, and when sold or used as independent products, they may be stored in a computer-readable storage medium. Based on this understanding, the technical solution of the present application, in essence, or the part that contributes to the prior art, or part of this technical solution can be embodied in the form of a software product. This computer software product is stored in a storage medium and includes several instructions for enabling a computer device (such as a personal computer, server, or network device, etc.) to execute all or part of the steps of the methods described in various embodiments of the present application. The aforementioned storage media include: U disk, mobile hard disk, read-only memory (ROM, Read-Only Memory), random access memory (RAM, Random Access Memory), magnetic disk, optical disc, and other media that can store program code.

On the other hand, the present application further provides a computer program product, where the computer program product includes a computer program stored on a non-transitory computer-readable storage medium, and the computer program includes program instructions, when the program instructions are executed by a computer, the computer is able to perform the control method for the refrigeration system provided in each of the above methods, where the method includes: in a case that a current ambient temperature being within a first preset temperature range is determined, activating a water pump of the refrigeration system and a compressor of the refrigeration system, and in a case that a first pressure corresponding to the refrigeration system being less than a preset pressure value is determined, maintaining the water pump and the compressor in operation; in a case that the first pressure corresponding to the refrigeration system reaching the preset pressure value is determined, activating a fan of the refrigeration system, so as to maintain a pressure of the refrigeration system within a preset pressure range for cooling a battery management system; in a case that the current ambient temperature being within a second preset temperature range is determined, activating the water pump of the refrigeration system, and prohibiting activation of the compressor and the fan, where a highest temperature of the second preset temperature range is less than or equal to a lowest temperature of the first preset temperature range.

On yet another hand, the present application further provides a non-transient computer-readable storage medium, on which a computer program is stored, and when the computer program is executed by a processor, the implementation of the control method for the refrigeration system provided above is performed, where the method includes: in a case that a current ambient temperature being within a first preset temperature range is determined, activating a water pump of the refrigeration system and a compressor of the refrigeration system, and in a case that a first pressure corresponding to the refrigeration system being less than a preset pressure value is determined, maintaining the water pump and the compressor in operation; in a case that the first pressure corresponding to the refrigeration system reaching the preset pressure value is determined, activating a fan of the refrigeration system, so as to maintain a pressure of the refrigeration system within a preset pressure range for cooling a battery management system; in a case that the current ambient temperature being within a second preset temperature range is determined, activating the water pump of the refrigeration system, and prohibiting activation of the compressor and the fan, where a highest temperature of the second preset temperature range is less than or equal to a lowest temperature of the first preset temperature range.

The apparatus embodiments described above are merely illustrative. The units described as separate components may or may not be physically separated. The components shown as units may or may not be physical units, that is, they may be located in a place or distributed across multiple network units. Depending on actual needs, some or all of the modules can be selected to achieve the objectives of the solutions in these embodiments. A person of ordinary skill in the art can understand and implement them without creative efforts.

Through the description of the above implementations, those skilled in the art can clearly understand that each implementation can be realized by means of software plus a necessary general hardware platform, and of course, it can also be realized by hardware. Based on such an understanding, the essence of the above technical solution, or the part that contributes to the prior art, can be embodied in the form of a software product. This computer software product can be stored in a computer-readable storage medium, such as ROM/RAM, magnetic disk, optical disc, etc., and includes several instructions to make a computer device (which may be a personal computer, server, or network device, etc.) execute the methods described in each embodiment or some parts of the embodiments.

The above are only the specific implementations of the present application, but the protection scope of the present application is not limited thereto. Any technician familiar with the technical field can easily think of changes or substitutions within the technical scope disclosed in the present application, and they should all be covered within the protection scope of the present application. Therefore, the protection scope of the present application shall be subject to the protection scope of the claims.

## Claims

1. A control method for a refrigeration system, comprising:
in a case that a current ambient temperature being within a first preset temperature range is determined, activating a water pump of the refrigeration system and a compressor of the refrigeration system, and in a case that a first pressure corresponding to the refrigeration system being less than a preset pressure value is determined, maintaining the water pump and the compressor in operation;
in a case that the first pressure corresponding to the refrigeration system reaching the preset pressure value is determined, activating a fan of the refrigeration system, so as to maintain a pressure of the refrigeration system within a preset pressure range for cooling a battery management system;
in a case that the current ambient temperature being within a second preset temperature range is determined, activating the water pump of the refrigeration system, and prohibiting activation of the compressor and the fan, wherein a highest temperature of the second preset temperature range is less than or equal to a lowest temperature of the first preset temperature range.

2. The control method for the refrigeration system according to claim 1, wherein, in the case that the current ambient temperature being within the first preset temperature range is determined, the activating the water pump of the refrigeration system and the compressor of the refrigeration system comprises:
in the case that the current ambient temperature being within the first preset temperature range is determined, activating the water pump of the refrigeration system, and in a case that a running duration of the water pump reaches a preset duration, activating the compressor of the refrigeration system.

3. The control method for the refrigeration system according to claim 1, wherein, in the case that the current ambient temperature being within the first preset temperature range is determined, before activating the water pump of the refrigeration system and the compressor of the refrigeration system, the method further comprises:
receiving a refrigeration demand sent by the battery management system;
based on the refrigeration demand, detecting the current ambient temperature;
in a case that the current ambient temperature being less than a preset temperature is determined, determining whether the current ambient temperature is within the first preset temperature range or within the second preset temperature range.

4. The control method for the refrigeration system according to any one of claims 1 to 3, wherein after activating the fan of the refrigeration system, the method further comprises:
obtaining a second pressure corresponding to the refrigeration system;
adjusting at least one of system operating parameters of the refrigeration system based on the second pressure, so as to maintain the pressure of the refrigeration system within the preset pressure range for cooling the battery management system, wherein the system operating parameters comprise: a wind speed of the fan, activation of the fan, deactivation of the fan, a rotation speed of the compressor, and a rotation speed of the water pump.

5. The control method for the refrigeration system according to claim 4, wherein the battery management system corresponds to a target temperature range;
the adjusting the at least one of the system operating parameters of the refrigeration system based on the second pressure comprises:
detecting a current water temperature corresponding to the battery management system;
based on the current water temperature, the target temperature range, and the second pressure, adjusting the at least one of the system operating parameters of the refrigeration system.

6. A control apparatus for a refrigeration system, comprising:
a first control module, configured to: in a case that a current ambient temperature being within a first preset temperature range is determined, activate a water pump of the refrigeration system and a compressor of the refrigeration system, and in a case that a first pressure corresponding to the refrigeration system being less than a preset pressure value is determined, maintain the water pump and the compressor in operation;
a second control module, configured to: in a case that the first pressure corresponding to the refrigeration system reaching the preset pressure value is determined, activate a fan of the refrigeration system, so as to maintain a pressure of the refrigeration system within a preset pressure range for cooling a battery management system;
a third control module, configured to: in a case that the current ambient temperature being within a second preset temperature range is determined, activate the water pump of the refrigeration system, and prohibit activation of the compressor and the fan, wherein a highest temperature of the second preset temperature range is less than or equal to a lowest temperature of the first preset temperature range.

7. An interactive system for refrigeration, comprising: a refrigeration system and a battery management system, wherein the refrigeration system and the battery management system are communicatively connected;
the battery management system is configured to: generate a refrigeration demand, and send the refrigeration demand to the refrigeration system;
the refrigeration system is configured to: based on the refrigeration demand, in a case that a current ambient temperature being within a first preset temperature range is determined, activate a water pump of the refrigeration system and a compressor of the refrigeration system, and in a case that a first pressure corresponding to the refrigeration system being less than a preset pressure value is determined, maintain the water pump and the compressor in operation; in a case that the first pressure corresponding to the refrigeration system reaching the preset pressure value is determined, activate a fan of the refrigeration system, so as to maintain a pressure of the refrigeration system within a preset pressure range for cooling the battery management system; in a case that the current ambient temperature being within a second preset temperature range is determined, activate the water pump of the refrigeration system, and prohibit activation of the compressor and the fan, wherein a highest temperature of the second preset temperature range is less than or equal to a lowest temperature of the first preset temperature range.

8. A working machinery, configured to implement steps of the control method for the refrigeration system according to any one of claims 1 to 5.

9. An electronic device, comprising a memory, a processor, and a computer program stored on the memory and runnable on the processor, wherein when the processor executes the program, steps of the control method for the refrigeration system according to any one of claims 1 to 5 are implemented.

10. A non-transitory computer-readable storage medium, wherein a computer program is stored thereon, when the computer program is executed by a processor, steps of the control method for the refrigeration system according to any one of claims 1 to 5 are implemented.
